(19) **Europäisches Patentamt**
**European Patent Office**
**Office européen des brevets**

(11) **EP 1 843 924 B1**

(12) **EUROPÄISCHE PATENTSCHRIFT**

(45) Veröffentlichungstag und Bekanntmachung des Hinweises auf die Patenterteilung:
**15.04.2015 Patentblatt 2015/16**

(21) Anmeldenummer: **06704205.1**

(22) Anmeldetag: **12.01.2006**

(51) Int Cl.:
***B60T 7/22*** *(2006.01)*

(86) Internationale Anmeldenummer:
**PCT/EP2006/050188**

(87) Internationale Veröffentlichungsnummer:
**WO 2006/079589 (03.08.2006 Gazette 2006/31)**

(54) **VERFAHREN UND VORRICHTUNG ZUR VERMEIDUNG UND/ODER MINDERUNG DER FOLGEN VON KOLLISIONEN BEIM AUSWEICHEN VOR HINDERNISSEN**

METHOD AND DEVICE FOR PREVENTING AND/OR REDUCING THE CONSEQUENCES OF COLLISIONS WHEN SWERVING TO AVOID OBSTACLES

PROCEDE ET DISPOSITIF POUR EVITER ET/OU REDUIRE LES CONSEQUENCES DE COLLISIONS EN CAS D'EVITEMENT D'OBSTACLES

(84) Benannte Vertragsstaaten:
**DE FR GB IT**

(30) Priorität: **25.01.2005 DE 102005003274**

(43) Veröffentlichungstag der Anmeldung:
**17.10.2007 Patentblatt 2007/42**

(73) Patentinhaber: **ROBERT BOSCH GMBH
70442 Stuttgart (DE)**

(72) Erfinder:
• **OECHSLE, Fred
71642 Ludwigsburg (DE)**
• **BRANZ, Wolfgang
70180 Stuttgart (DE)**
• **SCHMIDT, Christian
70469 Stuttgart (DE)**

(56) Entgegenhaltungen:
EP-A- 1 251 051    WO-A1-03/006288
DE-A1- 10 231 557    DE-A1- 10 231 584
US-A- 6 017 101    US-A1- 2003 220 738

EP 1 843 924 B1

**Beschreibung**

Stand der Technik

Die Erfindung betrifft ein Verfahren und Vorrichtung zur Vermeidung und/oder Minderung der Folgen von Kollisionen beim Ausweichen vor Hindernissen, insbesondere bei Kraftfahrzeugen.

Die zunehmende Verbreitung von elektrisch steuerbaren Brems- und Lenkeinrichtungen in Kraftfahrzeugen sowie von Sensoren, die mögliche Hindernisse im Fahrzeugumfeld erfassen, ermöglichen Systeme zur Vermeidung und/oder zur Minderung der Folgen von Kollisionen mit Hindernissen.

Mithilfe von Umfelderfassungssystemen ist es beispielsweise möglich, potenzielle Kollisionen mit Hindernissen frühzeitig zu erkennen. Solche Unfälle können durch rechtzeitige Warnung des Fahrers bzw. durch Einflussnahme auf die Fahrzeugbewegung mittels steuerbarer Bremssowie Lenkeinrichtungen vermieden werden. Außerdem können in kritischen Situationen das Bremssystem auf eine Notbremsung oder die Rückhaltesysteme auf einen Unfall vorbereitet werden.

Zu den Sensoren für die Erfassung des Fahrzeugumfelds zählen z.B. Ultraschall-, Radar-, Lidar- und/oder Videosysteme. Als steuerbare Teilsysteme von Bremsanlagen für den aktiven Druckaufbau stehen beispielsweise Hydroaggregate von ESP-Systemen, aktiv ansteuerbare Bre mskraftverstärker, elektrohydraulische Bremsanlagen oder künftig elektromechanische Bremsanlagen zur Verfügung. Zur Beeinflussung der Lenkung kommen aktive Lenksysteme oder Steer-by-Wire Systeme (SBW) in Betracht.

In der DE 101 18 707 A1 wird beschrieben, bei Kollisionsgefahr vorbereitende Maßnahmen durchzuführen, welche keine fahrzeugverzögernde Wirkung haben, die Fahrzeugverzögerung aber vorbereiten.

Ferner sind auch Warneinrichtungen zur Kollisionsvermeidung beschrieben worden, die nicht auf die Unterstützung des Fahrers bei der Durchführung eines Ausweichmanövers zielen.

Systeme zur Kollisionsvermeidung bzw. Kollisionsfolgenminderung greifen durch einen aktiven Brems- und/oder Lenkeingriffe in das System ein. Die Stärke der Bremseingriffe wird jedoch nicht für die Unterstützung eines Ausweichmanövers optimiert. So beschreiben z.B. die EP 1300275 A1 und EP 0891903 A2 eine Vorrichtung, die ein Fahrzeug genau dann automatisch bremst, wenn dieses unter Ausnutzung der fahrphysikalischen Grenze eine Kollision mit einem Hindernis nicht mehr vermeiden kann. Die einzelnen Eskalationsstufen mit den zugehörigen Eingriffen, die letztlich zur Auslösung des Systems führen, sind in der DE 102 20 567 A1 festgehalten. Für automatisch geführte Fahrzeuge werden Systeme zum Ausweichen und zur Kollisionsvermeidung in der DE 38 30 790 A1, der EP 0433322 B1 oder der WO 9002985 A1 beschrieben, für nicht automatisch geführte Fahrzeuge sind solche System in der WO 0208010 A1 und DE 19831071 A1 gezeigt, wobei letzteres nicht vollautomatisch wirkt, sondern dem Fahrer die Ausweichtrajektorie durch ein Lenkmoment vorschlägt.

Es sind auch Verfahren zur Fahrdynamikregelung beschrieben, welche jedoch lediglich zum Ziel haben, die Fahrerlenkvorgabe optimal umzusetzen. Diese Einrichtungen verfügen jedoch nicht über eine Umfeldsensorik, sondern nur über eine fahrzeugeigene Sensorik. Folglich können die Bremseingriffe nicht an die Lage von Hindernissen angepasst werden, sondern nur die Stabilisierung des Fahrzustands zum Ziel haben.

Außerdem wird in der noch nicht veröffentlichten deutschen Patentanmeldung DE 102004008894 vom 24.02.2004 ist ein System beschrieben, welches durch geeignete haptische Lenkvorgaben ein Ausweichmanöver unterstützen kann. Eine gleichzeitige Abbremsung des Fahrzeugs zur Optimierung der Ausweichtrajektorie ist nicht adressiert.

Aus WO 03/006288 A1 ist ein Verfahren nach dem Oberbergriff des Anspruchs 1 bekannt.

US-2003/0220738 Al zeigt eine Vorgehensweise, bei welchem bei erkanntem Hindernis eine Ausweichtrajektorie durch Berechnen der notwendigen Gierrate bzw. des notwendigen Giermoments des Fahrzeugs eingestellt wird. Die Realisierung der notwendigen Gierrate bzw. des notwendigen Giermoments erfolgt durch entsprechende Ansteuerung der Bremsen der linken und der rechten Fahrzeugseite.

DE 102 31 584 Al zeigt eine Vorgehensweise, nach der zur Verhinderung eines Zusammenstoßes eine Notbremsung des Fahrzeugs durch selbsttätiges Auslösen einer Verzögerung eines Fahrzeugs durchgeführt wird. Die Notbremsung wird dann eingeleitet, wenn ein Schwellenwert überschritten wird. Der Schwellenwert ist abhängig vom Lenkwinkel, den der Fahrer eingestellt hat.

EP 1 251 051 A1 zeigt eine Vorgehensweise, nach der ein Ausweichfahrmodus eingeleitet wird, wenn eine Kollision des Fahrzeugs mit einem Hindernis allein durch die Bremsoperation des Fahrers nicht ausgeschlossen werden kann. Im Ausweichfahrmodus werden Maßnahmen vorgeschlagen, welche eine verbesserte Lenkbarkeit des Fahrzeugs und oder eine verbesserte Stabilität des Fahrzeugs beim Ausweichvorgang zur Folge haben sollen. Wesentlich ist, dass eine Sollgierrate für den Ausweichvorgang ermittelt wird, die dann durch verschiedene Maßnahmen wie beispielsweise verschiedene Arten der Bremsensteuerung oder durch Eingriff in eine Hinterradlenkung, eingestellt wird.

Vorteile der Erfindung

Die nachfolgend dargestellte Vorgehensweise ermöglicht wirksam die Vermeidung bzw. Minderung der Folgen von Unfällen mit Hindernissen durch Unterstützung des Fahrers beim Ausweichen auf Basis von Informationen über den Bewegungszustand des Egofahrzeugs sowie von Fremdfahrzeugen und Hindernissen.

Eine deartige Unterstützung wird duch den Gegenstand des unabhängigen Anspruchs 1 erreicht.

Erfindungsgemäß besteht die Unterstützung in einer gezielten, zeitlich gesteuerten Abbremsung des Egofahrzeugs während des Ausweichvorganges, so dass der Fahrer ein besseres Ausweichmanöver fahren kann als ohne Abbremsung. Je nach Systemausprägung kann darüber hinaus auch die Lenkvorgabe des Fahrers durch einen geeigneten Lenkaktuator verändert werden.

Damit wird zur Ausweichunterstützung in jedem Falle auf die Bremse eingewirkt, so dass der Fahrer in die Lage versetzt wird, eine günstigere Ausweichtrajektorie zu fahren. Es wird aber zu einem Zeitpunkt eingegriffen, ab dem eine Kollision nur noch durch die richtige Kombination von Bremsen und Lenken vermieden werden kann. In vorteilhafter Weise wird also der Fahrer dann aktiv unterstützt, wenn es eine Kollision noch vermeidbar ist. In vorteilhafter Weise ergibt dadurch gegenüber Systeme, die erst dann eingreifen, wenn die Kollision unvermeidlich ist, einen erheblichen Zeitvorteil.

Weitere Vorteile ergeben sich aus den abhängigen Ansprüchen bzw. aus der nachfolgenden Beschreibung von Ausführungsbeispielen.

Zeichnung

Die Erfindung wird nachfolgend anhand von in der Zeichnung dargestellten Ausführungsbeispielen verdeutlicht. Figur 1 zeigt eine schematische Darstellung der Fahrtrajektorien unterschiedlicher Fahrstrategien für das Szenario Annäherung an ein Hindernis. Figur 2 zeigt eine schematische Darstellung der Abstände zum Hindernis, bei welchen Kollisionen durch unterschiedliche Strategien vermieden werden können. Figur 3 zeigt ein Ablaufdiagramm während in Figur 4 eine Vorrichtung dargestellt ist, welche das Ablaufdiagramm realisiert.

Beschreibung von Ausführungsbeispielen

Nachfolgend wird ein Assistenzsystem für Führer von Kraftfahrzeugen beschrieben, welchem die Erkenntnis zugrunde liegt, dass extreme Ausweichmanöver an der fahrphysikalischen Grenze in einer Kombination von Lenk- und Bremsaktionen bestehen. Die fahrphysikalische Grenze ist dadurch gekennzeichnet, dass die zwischen Reifen und Fahrbahn übertragbare Kraft ihrem Betrag nach begrenzt ist. Ein Fahrmanöver an der fahrphysikalischen Grenze, im Folgenden "extremes Fahrmanöver" genannt, ist dadurch gekennzeichnet, dass der Betrag der Kraft zu jedem Zeitpunkt dem erreichbaren Grenzbetrag entspricht. Die Kraft liegt also auf dem aus der Literatur bekannten "Kammschen Kreis", wobei die Kraftrichtung einen beliebigen zeitlichen Verlauf besitzen kann. Die Kraft kann in eine Komponente parallel zur Fahrzeuglängsachse (Längsbeschleunigung durch Bremsen bzw. "Gas geben") und eine Komponente quer (senkrecht) zur Fahrzeuglängsachse (Querbeschleunigung durch Lenken) zerlegt werden. Zum Beispiel wirkt bei einem extremen Bremsmanöver ("Vollbremsung") nur eine konstante Komponente in Fahrzeuglängsrichtung ("nur Bremsen"). Bei einem extremen Lenkmanöver ("extreme Kreisfahrt") hingegen nur eine konstante Komponente senkrecht zur Fahrzeuglängsachse ("nur Lenken").

Bei fortwährender Annäherung eines Fahrzeugs (Egofahrzeug) an ein Hindernis mit einer gegebenen Relativgeschwindigkeit $v_{rel}$ ist eine Kollisionsvermeidung durch Bremsen nur bis zu einem berechenbaren Grenzabstand $d_{Bremsen}$ möglich. Bei Unterschreitung dieses Abstands ($d < d_{Bremsen}$) bleibt als einziges Mittel zur Kollisionsvermeidung ein Ausweichmanöver. Ob ein derartiges Ausweichmanöver im Rahmen der fahrphysikalischen Grenzen möglich ist, hängt neben der Relativgeschwindigkeit auch von der Ausdehnung (v.a. Breite) des Egofahrzeugs und des Hindernisses ab. Es hat sich gezeigt, dass bei endlichen Objektausdehnungen immer eine Grenzrelativgeschwindigkeit $v_{rel} > v_{relAusw}$ existiert, oberhalb der eine Kollisionsvermeidung durch Ausweichen bis zu einem geringeren Hindernisabstand $d_{Ausweichen}$ möglich ist als ein vermeidendes Bremsmanöver: $d_{Ausweichen} < d_{Bremsen}$. Analog zum Abstand $d_{Bremsen}$ bezeichnet der Grenzabstand $d_{Ausweichen}$ den Abstand bis zu dem eine Kollision durch ein extremes Ausweichmanöver an der fahrphysikalischen Grenze vermeidbar ist. Als "extremes Ausweichmanöver" ist dabei das Fahrmanöver an der fahrphysikalischen Grenze definiert, das bei gegebener Relativgeschwindigkeit und Hindernisabstand (ggf. Hindernisbeschleunigung, falls verfügbar) den größtmöglichen Versatz senkrecht zur ursprünglichen Bewegungsrichtung des Egofahrzeugs am Ort des Hindernisses herstellt (größtmöglicher Weg in y-Richtung). Um ein solches extremes Ausweichmanöver fahren zu können ist es erforderlich einen optimalen zeitlichen Verlauf von Längs- und Querbescheunigung (bremsen/lenken) am Egofahrzeug zu berechnen. Es hat sich gezeigt, dass eine erhebliche Komponente an Längsbeschleunigung mittels Bremsen zur Durchführung eines extremes Ausweichmanövers aufgebracht werden muss. Auf diese Notwendigkeit eines Bremseingriffes zur Durchführung eines extremen Ausweichmanövers zielt der Kern des hier beschriebenen Assistenzsystems ab. Der Nutzen liegt insbesondere darin begründet, dass der durch ein extremes Ausweichmanöver mit Bremseingriff erreichbare y-Versatz (y-Richtung ist quer zur Fahrtrichtung) größer ist als bei einem Ausweichmanöver durch alleiniges Lenken (nur Querbeschleunigung). Es gilt $d_{Ausweichen} < d_{Lenken}$, wobei $d_{Lenken}$ der Grenzabstand ist, bis zu dem eine Kollision durch ein reines Lenkmanöver vermeidbar ist.

Das bedeutet, es existiert ein Abstands- und Relativgeschwindigkeitsbereich in dem eine Kollision zwar fahrphysikalisch vermeidbar ist, jedoch nicht durch ein alleiniges Lenkmanöver oder ein alleiniges Bremsmanöver. Genau diesen Bereich adressiert die im Folgenden beschriebene Funktion.

Versucht ein Fahrer einem Hindernis im Abstand d mit $d_{Ausweichen} <= d < d_{Lenken}$ durch reines Lenken auszuweichen, so würde dieses zur Kollision führen. Dies wird vom System erkannt, das den zeitlichen Verlauf der Bremsverzögerung, der für ein kollisionsvermeidendes Ausweichmanöver erforderlich ist, berechnet und automatisch von Beginn des Lenkmanövers an am Egofahrzeug einstellt. Indirekt wird über diesen Bremseingriff auch der zeitliche Verlauf der Querbeschleunigung mit beeinflusst. Im Idealfall kann der Fahrer dadurch ein extremes oder ein nahezu extremes Ausweichmanöver fahren, was durch die alleinige Lenkvorgabe ohne Abbremsung des Fahrzeugs nicht möglich gewesen wäre.

In einer weiteren Ausbaustufe greift das System auch in die Lenkung des Egofahrzeugs ein, um auch die Querbeschleunigung im Hinblick auf ein Ausweichmanöver weiter optimieren zu können.

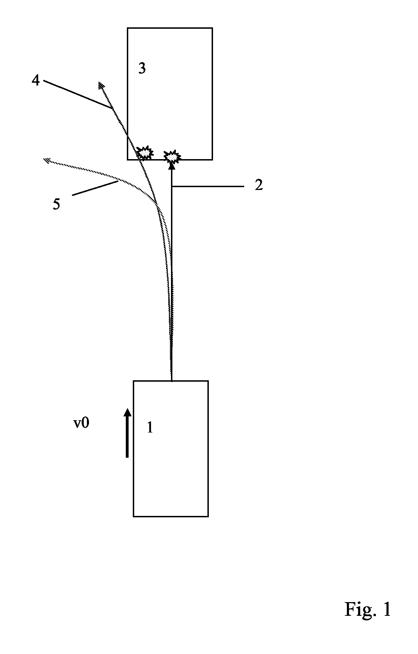

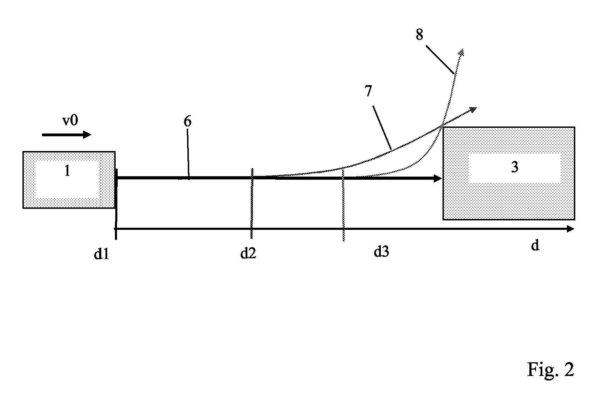

Die oben skizzierten Szenarien sind in den Figuren 1 und 2 dargestellt. Figur 1 zeigt ein Fahrzeug 1, welches sich einem Hindernis 3 mit einer Geschwindigkeit V0 annähert. Um eine Kollision zu vermeiden bzw. die Folgen zu vermindern stehen dem Fahrer Brems- und Lenkeingriffe zur Verfügung. Mit 2 ist die Trajektorie beschrieben, die bei einem ausschließlichen Bremseingriff entsteht. Ist der Abstand zum Hindernis zu gering, ist die Kollision unvermeidlich. Entsprechendes gilt einem ausschließlichen Lenkeingriff (Trajektorie 4) bei entsprechender Ausdehnung des Hindernis in y-Richtung. Die Trajektorie 5 zeigt eine Situation mit Brems- und Lenkeingriff. Dort ist es unter Umständen möglich, die Kollision zu vermeiden.

Die Bedingungen, unter denen eine Kollision vermeidbar ist oder nicht, ist in Figur 2 dargestellt. Auch hier ist ein sich einem Hindernis 3 näherndes Fahrzeug 1 dargestellt. In der Waagerechte ist dabei der Abstand d aufgetragen. Das Fahrzeug bewegt sich mit einer Geschwindigkeit V0. 6 zeigt die Trajektorie bei Bremseingriff, 7 die bei Lenkeingriff und 8 bei einem kombinierten Lenk- und Bremseingriff. Bis zu einem Abstand d1 ($d_{Bremsen}$) kann bei einer Vollbremsung als ausschließliche Maßnahme die Kollision vermieden werden bzw. die Folgen gering gehalten werden. Unterhalb eines Abstandes d2 ($d_{Lenken}$) wird dies durch einen ausschließlichen Lenkeingriff erreicht. d2 ist dabei kleiner als d1. Unterhalb eines Abstandes d3 ($d_{Ausweichen}$) kann bei einem kombinierten Brems- und Lenkeingriff die Kollision vermieden werden bzw. die Folgen gering gehalten werden. Die Abstände sind dabei abhängig von der Geschwindigkeit des Egofahrzeugs, der Geschwindigkeit des Hindernisses sowie von den Ausdehnungen des Egofahrzeugs und des Hindernisses. Ferner spielen Bremsen- und Reifenzustand beim Egofahrzeug eine Rolle. Für jede Situation werden die entsprechenden Abstände berechnet. In einer Ausführung ist unter Bremseingriff als Vollbremseingriff, unter Lenkeingriff ein Lenkeingriff an der physikalischen Grenze gemeint. In einer anderen Ausführung wird ein Bremseingriff mit einer bestimmter Verzögerung, ein Lenkeingriff mit bestimmter Querbeschleunigung zur Berechnung angenommen, z.B. Werte, die ein Fahrer üblicherweise bei Gefahr im Stande ist, einzustellen.

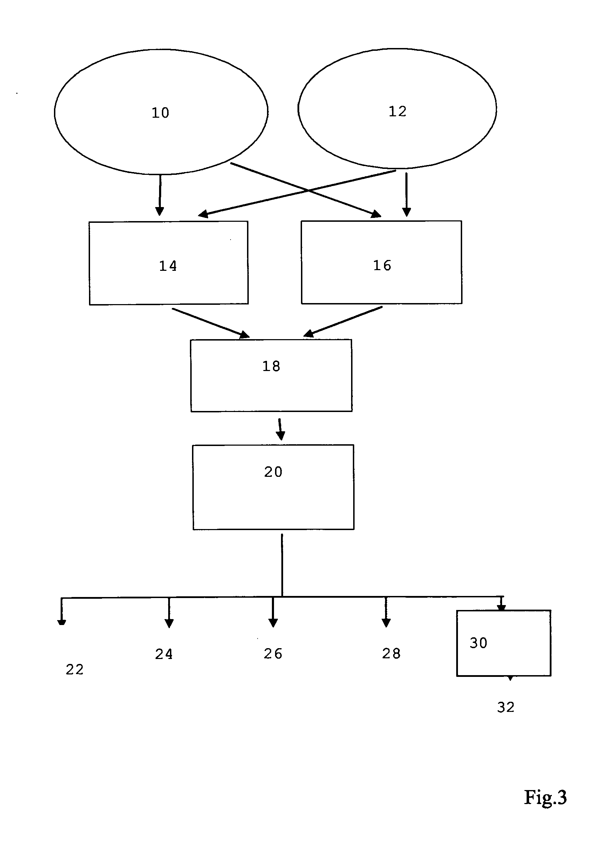

In Figur 3 ist ein Ablaufdiagramm gezeigt, welches ein Realisierungsbeispiel der obigen Vorgehensweise im Rahmen eines Programms eines Rechners einer weiter unten skizzierten Vorrichtung für ein Fahrerassistenzsystem darstellt.

Das skizzierte Programm wird zu vorgegebenen Zeitintervallen durchlaufen. Es umfasst die folgenden grundsätzlichen Module. Ein Modul erkennt, wann eine Kollision mit einem Hindernis nicht mehr durch alleiniges Bremsen vermeidbar ist. Ein weiteres Modul erkennt, wann eine Kollision mit einem Hindernis nicht mehr durch alleiniges Lenken vermeidbar ist.

Ein weiteres Modul berechnet, welche Lenk- und Bremsstrategie bei den gegebenen Bewegungsparametern der Objekte die günstigste ist.

Falls eine Kollision mit einem Hindernis nicht mehr durch alleiniges Lenken oder alleiniges Bremsen vermeidbar ist, wird entsprechend einem Lenkeingriff die optimale oder vorgegebene Fahrzeugverzögerung eingestellt und laufend den sich verändernden Bewegungsparametern angepasst. Dadurch ist der Fahrer in der Lage, günstigere Trajektorien im Sinne der Kollisionsvermeidung zu fahren, als wenn die Verzögerung nicht stattfindet.

Je nach Systemausprägung ist es möglich, die Fahrerlenkvorgabe über einen geeigneten Lenkaktuator an den ermittelten, günstigen Wert anzupassen. Eine günstige Ausprägung des Systems ist es, die Lenkunterstützung durch das System von einer vorangegangenen Lenkradbetätigung des Fahrers abhängig zu machen, die den Ausweichwunsch erkennen lässt. Dadurch verbleibt dem Fahrer die Möglichkeit, eine frontale Kollision mit dem Hindernis anderen Strategien vorzuziehen.

Sollte der Fahrer keine Ausweichstrategie verfolgen, so wird durch das System in jedem Falle kinetische Energie abgebaut und die Unfallfolgen dadurch vermindert.

Außerdem wird gegebenenfalls der Nutzen von nachgeschalteten Notbremssystemen dadurch erhöht, dass die Bremsanlage bereits befüllt ist und der erforderliche Pumpendruck im Bremssystem aufgebaut ist. Somit kann eine höhere Bremswirkung erzielt werden, da das System entgegen einem Notbremssystem zu einem Zeitpunkt aktiv wird, an dem eine Kollision noch sicher durch einen gleichzeitigen Brems- und Lenkeingriff vermieden werden kann, nicht aber mehr durch alleiniges Lenken oder alleiniges Bremsen.

Außerdem kann in einer solchen kritischen Situation der Fahrer optisch, akustisch oder haptisch gewarnt werden. Reversible Sicherheitssysteme können frühzeitig aktiviert oder die Einstellparameter angepasst werden.

Das skizzierte System unterstützt den Fahrer beim Ausweichen vor Hindernissen durch gezielte Abbremsung des Fahrzeuges. Die Abbremsung wird dabei der Lage und den Bewegungsparametern der Objekte (Egofahrzeug und Hindernis) angepasst. Das System mindert die Folgen von Kollisionen durch Abbremsung des Fahrzeuges. Das System benutzt Umfeldsensorik (mindestens einen der Sensoren Radar, Lidar, Video, Infrarot, Ultraschall etc.). Folgende zusätzliche Systemausprägungen sind denkbar: Die Lenkvorgabe des Fahrers kann durch einen geeigneten Lenkaktuator verändert werden, so dass eine bessere Ausweichtrajektorie realisiert wird. Bei Unvermeidbarkeit einer Kollision kann eine automatische Notbremsung ausgeführt werden. Der Fahrer wird über die kritische Situation gewarnt und informiert. Reversible Rückhaltemittel werden ausgelöst. Reversible (Bremsassistent) und nicht reversible Rückhaltemittel (Airbag) werden umparametriert.

Aus einer Umfeldsensorik 10 (z.B. einen Video-, einen Radar-, einen Lidar-, einen Ultraschall- und/oder reinen Infrarotsensor umfassend) werden dem ersten und dem zweiten Modul 14, 16 Größen wie Relativgeschwindigkeit, Abstand, Ausdehnung des Hindernisses, etc. zugeführt. Eine Fahrzeugzustandsensorik 12, die z.B. Lenkwinkel, Bremsbetätigung, Gierrate, etc. erfasst, führt den Modulen 14 und 16 die entsprechenden Größen zu. Aus diesen Größen berechnen die Module 14 bzw. 16 unter Berücksichtigung vorgegebener Werte bezüglich Bremsverzögerung und Querbeschleunigung durch Lenken die Abstandswerte, unterhalb derer eine Kollision durch alleiniges Bremsen bzw. durch alleiniges Lenken nicht mehr möglich ist. Anhand eines geeigneten Fahrzeugsmodells kann der Abstand zum Hindernis für das letztmögliche Brems- und für das letztmögliche Lenkmanöver relativ einfach bestimmt werden, indem das Modell für beide Manöver an der Fahrstabilitätsgrenze bewegt wird. Die Modellkomplexität zeigt dabei maßgeblichen Einfluss auf die Güte der beiden berechneten Abstände. Im einfachsten Fall kann dies mit einer Reibwertüberabschätzung zwischen Fahrzeug und Fahrbahn und einem Massepunktmodell erfolgen. Geht man von einer maximal übertragbaren Beschleunigung von 1g aus, so lassen sich die letztmöglichen Abstände bei einer Hindernisbreite q anhand der kinematischen Gleichungen sehr einfach berechnen ($V_{Ego}$ = Geschwindigkeit des eigenen Fahrzeugs, $V_{Hindernis}$ = Geschwindigkeit des Hindernisses, $\Delta x$ = letztmöglicher Abstand):

• Bremsen:

$$\Delta x = \frac{(v_{Ego} - v_{Hindernis})^2}{2g}$$

• Ausweichen:

$$\Delta x = \sqrt{\frac{2q(v_{Ego} - v_{Hindernis})^2}{g}}$$

Durch Vergleich mit dem aktuellen Abstand wird dann erkannt, dass eine Kollision durch alleiniges Bremsen bzw. Lenken nicht mehr vermeidbar ist.

Wird erkannt, dass sowohl durch alleiniges Bremsen als auch durch alleiniges Lenken es nicht möglich ist, eine Kollision zu vermeiden, wird im Modul 18 anhand des Abstandes, der Relativgeschwindigkeit, einer vorgegebenen Verzögerung und Querbeschleunigung eine Ausweichstrategie ermittelt. Ausgehend von einem Massepunktmodell für die Fahrzeug- und Hindernisbewegung wird ein Extremwertproblem formuliert:

• Längsbewegung:

$$\Delta x = v_{Ego} t + \frac{1}{2} a_x t^2$$

• Querbewegung:

$$q = \frac{1}{2} a_y t^2$$

Die Zeit $t$ lässt sich eliminieren, sodass man eine Funktion $\Delta x = f(a_x, a_y)$ erhält. Das Minimum dieser Funktion liefert dann den minimalen, gerade noch kollisionsvermeidenden Abstand längs zum Hindernis und führt somit auf eine analytische Lösung für die Quer- und Längsbeschleunigungen $a_x$, $a_y$. Zur Berücksichtigung des tatsächlichen Fahrzeugverhaltens wird die berechnete Lösung anhand eines detaillierteren Fahrzeugmodells entsprechend modifiziert und optimiert. Aus den bekannten Verläufen von Quer- und Längsbeschleunigung werden dann der zugehörige Lenk- und Bremseingriff bestimmt. Die geeignete Strategie besteht dann zumindest im Bremseingriff in dem berechneten Verlauf, ggf. mit dem zugehörigen unterstützenden Lenkeingriff.

Im nächsten Schritt 20 wird die errechnete Abbremsung (Verzögerung) ausgeführt. Dies erfolgt durch gezielte Steuerung der Bremsanlage, z.B. im Rahmen eines Verzögerungsregelkreises. Zusätzlich zur Abbremsung erfolgt eine optische, akustische und/oder haptische Signalisierung 22 für den Fahrer, einen Eingriff in vorhandene Rückhaltesysteme 24, in die Motorsteuerung 26 z.B. zur Reduzierung des Antriebmoments und/oder die Einleitung einer Notbremsung bzw. Umparametrisierung des Bremsassistenten 28. Ferner kann zusätzlich oder alternativ vorgesehen sein, den Ausweichwunsch des Fahrers im Schritt 30 zu ermitteln (z.B. anhand des Lenkwinkels) und davon abhängig einen Lenkaktuator 32 zu Verstärkung des Fahrereingriffs anzusteuern.

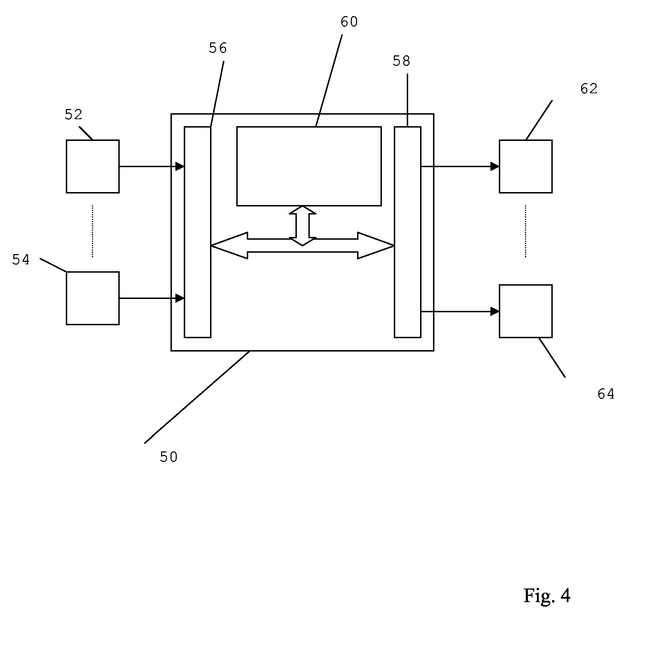

Figur 4 zeigt eine Vorrichtung zur Durchführung der oben skizzierten Vorgehensweise. Dabei ist eine Steuereinheit 50 vorgesehen, deren Eingangskomponente 56 Signale von Umfeldsensoren 52 bis 54 zugeführt werden. Diese Sensoren sind je nach Ausführung einer oder mehrere Sensoren, z.B. Video-, Radar-, Ultraschallsensoren. Die Steuereinheit 50 besteht im Wesentlichen aus Eingangskomponente 56, Rechner 58 und Ausgangskomponente 58. Diese Komponenten sind mittels eines Bussystems miteinander verbunden. Über die Ausgangskomponente werden Aktuatoren 62 bis 64, z.B. Bremsen und/oder eine Lenkung angesteuert. Das oben skizzierte Programm läuft im Rechner 58 ab, die erwähnte Eingangs- und Ausgangssignale werden über die Komponenten 56 und 60 geführt.

**Patentansprüche**

1. Verfahren zur Vermeidung und/oder Minderung der Folgen von Kollisionen beim Ausweichen eines Fahrzeugs (1) vor einem Hindernis (3), wobei mittels wenigstens einem Umfeldsensor (52 bis 54) wenigstens ein Hindernis (3) erkannt wird, wobei Daten des Hindernisses (3) ermittelt werden und auf der Basis der Daten des Hindernisses (3) sowie Daten des Fahrzeugs (1) Verläufe von Längs- und Querbeschleunigungen des Fahrzeugs ermittelt werden, die für eine Kollisionsvermeidung notwendig sind, und wenigstens ein Steuersignal erzeugt wird, mit dessen Hilfe der ermittelte Verlauf der Längsbeschleunigung durch gezielte Steuerung der Bremsanlage ausgeführt wird, **dadurch gekennzeichnet, dass** aus den Daten ermittelt wird, ob eine Kollision mit dem Hindernis (3) alleine durch Bremsen vermeidbar ist und ob eine Kollision mit dem Hindernis (3) alleine durch Lenken vermeidbar ist, und die Verzögerung des Fahrzeugs (1) dann vorgenommen wird, wenn die Kollision mit dem Hindernis weder alleine durch Bremsen noch alleine durch Lenken vermeidbar ist.

2. Verfahren nach einem der vorhergehenden Ansprüche, **dadurch gekennzeichnet, dass** die Daten Bewegungsparameter und/oder Ausdehnungsparameter des Hindernis (3) sind.

3. Verfahren nach einem der vorhergehenden Ansprüche, **dadurch gekennzeichnet, dass** die Daten des Fahrzeugs (1) Daten der Eigenbewegung des Fahrzeugs (1), insbesondere die Geschwindigkeit (VO), sind.

4. Verfahren nach einem der vorhergehenden Ansprüche, **dadurch gekennzeichnet, dass** zusätzlich durch einen geeigneten Lenkaktuator (62, 64) die Fahrerlenkvorgabe so verändert, dass eine mit Hinblick auf die Kollisionsvermeidung bessere Ausweichtrajektorie realisiert wird.

5. Verfahren nach Anspruch 4, **dadurch gekennzeichnet, dass** die Lenkunterstützung von der vorangegangenen Lenkradbetätigung des Fahrers abhängig ist.

6. Verfahren nach einem der vorhergehenden Ansprüche, **dadurch gekennzeichnet, dass** eine Kollision unvermeidbar ist, wenn unter Berücksichtigung der fahrphysikalischen Bewegungsmöglichkeiten zumindest des Fahrzeugs (1), vorzugsweise aller beteiligten Objekte, die Kollision nicht abgewendet werden kann.

7. Verfahren nach einem der vorhergehenden Ansprüche, **dadurch gekennzeichnet, dass** zusätzlich eine automatische Notbremsung durchführt wird. dass zusätzlich eine automatische Notbremsung durchführt wird.

8. Verfahren nach einem der vorhergehenden Ansprüche, **dadurch gekennzeichnet, dass** zusätzlich der Fahrer optisch, akustisch und/oder haptisch informiert bzw. gewarnt wird.

9. Verfahren nach einem der vorhergehenden Ansprüche, **dadurch gekennzeichnet, dass** zusätzlich eine Betätigung reversibler Rückhaltesysteme wie z.B. Gurtstraffer erfolgt.

10. Verfahren nach einem der vorhergehenden Ansprüche, **dadurch gekennzeichnet, dass** zusätzlich eine Umparametrierung reversibler und/oder nicht reversibler Rückhaltesysteme oder anderer Sicherheitssysteme (z.B. Airbag, Bremsassistent) erfolgt.

11. Vorrichtung zur Vermeidung und/oder Minderung der Folgen von Kollisionen beim Ausweichen eines Fahrzeugs (1) vor Hindernissen (3), mit einer Steuereinheit (50), die ein Verfahren nach einem der vorstehenden Ansprüche ausführt.

**Claims**

1. Method for preventing and/or reducing the consequences of collisions when a vehicle (1) swerves to avoid an obstacle (3), wherein at least one obstacle (3) is detected by means of at least one surroundings sensor (52 to 54), wherein data relating to the obstacle (3) are determined and profiles of the longitudinal accelerations and lateral accelerations of the vehicle are determined on the basis of the data of the obstacle (3) and of data of the vehicle (1), said profiles being necessary for the prevention of collisions, and at least one control signal is generated, with the aid of which the determined profile of the longitudinal acceleration is carried out by selective control of the brake system, **characterized in that** on the basis of the data it is determined whether a collision with the obstacle (3) can be prevented solely by braking and whether a collision with the obstacle (3) can be prevented solely by steering, and the vehicle (1) is then decelerated if the collision with the obstacle can be prevented neither solely by braking nor solely by steering.

2. Method according to one of the preceding claims, **characterized in that** the data are movement parameters and/or extension parameters of the obstacle (3).

3. Method according to one of the preceding claims, **characterized in that** the data of the vehicle (1) are data of the vehicle's (1) own movement, in particular the speed (VO).

4. Method according to one of the preceding claims, **characterized in that** the driver's steering presetting is additionally changed by a dedicated steering actuator (62, 64) in such a way that an avoidance trajectory which is better with respect to preventing a collision is implemented.

5. Method according to Claim 4, **characterized in that** the steering assistance is dependent on the preceding steering wheel activation by the driver.

6. Method according to one of the preceding claims, **characterized in that** the one collision cannot be prevented if the collision cannot be averted by taking into account the physical driving movement parameters at least of the vehicle (1), preferably of all the objects involved.

7. Method according to one of the preceding claims, **characterized in that** automated emergency braking is additionally carried out.

8. Method according to one of the preceding claims, **characterized in that** the driver is additionally informed and/or warned visually, acoustically and/or haptically.

9. Method according to one of the preceding claims, **characterized in that** reversible restraint systems such as, for example, seat belt pretensioners are additionally activated.

10. Method according to one of the preceding claims, **characterized in that** reparameterization of reversible and/or non-reversible restraint systems or of other safety systems (for example air bag, braking assistant) is additionally carried out.

11. Device for preventing and/or reducing the consequences of collisions when a vehicle (1) swerves to avoid obstacles (3), having a control unit (50) which is designed to carry out the method according to one of the preceding claims.

**Revendications**

1. Procédé d'évitement et/ou de réduction des conséquences de collisions en cas d'esquive d'un véhicule (1) devant un obstacle (3), au moins un obstacle (3) étant détecté à l'aide d'au moins un capteur d'environnement (52 à 54), les données de l'obstacle (3) étant calculées et les trajectoires d'accélérations longitudinale et transversale du véhicule étant calculées sur la base des données de l'obstacle (3) ainsi que des données du véhicule (1), lesdites trajectoires étant nécessaires pour permettre un évitement de collision et au moins un signal de commande étant produit à l'aide duquel la trajectoire calculée de l'accélération longitudinale est réalisée par commande ciblée de l'installation de freinage, **caractérisé en ce que** l'on calcule à partir des données si une collision avec l'obstacle (3) peut être évitée par un seul freinage et si une collision avec l'obstacle (3) peut être évitée par un seul changement de direction et une décélération du véhicule (1) est provoquée lorsque la collision avec l'obstacle ne peut être évitée ni par un seul freinage ni par un seul changement de direction.

2. Procédé selon l'une quelconque des revendications précédentes, **caractérisé en ce que** les données sont des paramètres de déplacement et/ou des paramètres de taille de l'obstacle (3).

3. Procédé selon l'une quelconque des revendications précédentes, **caractérisé en ce que** les données du véhicule (1) sont les données du mouvement propre du véhicule (1), notamment la vitesse (VO).

4. Procédé selon l'une quelconque des revendications précédentes, **caractérisé en ce que** la directive du conducteur peut être modifiée en sus par un actionneur de direction (62, 64) adapté de façon à réaliser une meilleure trajectoire d'esquive par rapport à l'évitement de collision.

5. Procédé selon la revendication 4, **caractérisé en ce que** l'aide à la conduite dépend de l'actionnement précédent du volant par le conducteur.

6. Procédé selon l'une quelconque des revendications précédentes, **caractérisé en ce qu'**une collision ne peut pas être évitée lorsque la collision ne peut être conjurée en tenant compte des possibilités de mouvement physiques du véhicule (1) au moins, de préférence de tous les objets concernés.

7. Procédé selon l'une quelconque des revendications précédentes, **caractérisé en ce qu'**un freinage d'urgence automatique est effectué en sus.

8. Procédé selon l'une quelconque des revendications précédentes, **caractérisé en ce que** le conducteur est en outre informé et/ou averti optiquement, acoustiquement et/ou haptiquement.

9. Procédé selon l'une quelconque des revendications précédentes, **caractérisé en ce qu'**un actionnement de systèmes de retenue réversibles, par exemple de tensionneurs de ceinture, se produit en sus.

10. Procédé selon l'une quelconque des revendications précédentes, **caractérisé en ce qu'**un reparamétrage réversible et/ou non réversible des systèmes de retenue ou autres systèmes de sécurité (par exemple des airbags, de l'assistant de freinage) se produit en sus.

11. Dispositif d'évitement et/ou de réduction des conséquences de collisions en cas d'esquive d'un véhicule (1) devant des obstacles (3), avec une unité de commande (50) mettant en oeuvre un procédé selon l'une quelconque des revendications précédentes.

Fig. 1

Fig. 2

Fig.3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10118707 A1
- EP 1300275 A1
- EP 0891903 A2
- DE 10220567 A1
- DE 3830790 A1
- EP 0433322 B1
- WO 9002985 A1
- WO 0208010 A1
- DE 19831071 A1
- DE 102004008894
- WO 03006288 A1
- US 20030220738 A1
- DE 10231584 A1
- EP 1251051 A1